# EUROPÄISCHE PATENTSCHRIFT

(11) **EP 1 003 614 B1**
(45) Veröffentlichungstag und Bekanntmachung des Hinweises auf die Patenterteilung: **10.08.2005**
(21) Anmeldenummer: 98933515.3
(22) Anmeldetag: 13.05.1998
(51) Int. Cl.: B06B 1/06, G01S 15/89

(54) **PRÜFKOPF FÜR DIE ULTRASCHALLPRÜFUNG NACH DEM IMPULS-ECHO-VERFAHREN**
MONITOR HEAD FOR ULTRASOUND CONTROL BY PULSE ECHO PROCESS
TETE DE CONTROLE POUR LE CONTROLE PAR ULTRASONS SELON LE PROCEDE PAR ECHO D'IMPULSION

(30) Priorität: 13.08.1997 DE 19735101
(43) Veröffentlichungstag der Anmeldung: 31.05.2000
(73) Patentinhaber: KRAUTKRÄMER GmbH & Co., D-50354 Hürth (DE)
(72) Erfinder: BÜCHLER, Johannes, D-53721 Siegburg (DE); ROST, Manfred, D-50398 Wesseling (DE); NIEDERDRÄNK, Torsten, D-50374 Erftstadt (DE)
(74) Vertreter: Bauer, Wulf, Dr.
(86) Internationale Anmeldenummer: PCT/DE1998/001323
(87) Internationale Veröffentlichungsnummer: WO 1999/008809

(56) Entgegenhaltungen:
- DE-A- 3 441 563
- DE-A- 3 710 339
- GB-A- 2 083 695
- US-A- 4 446 739
- BUCHLER J ET AL: "Electronic circuit for high frequency and broad-band ultrasonic pulse-echo operation" ULTRASONICS, MARCH 1987, UK, Bd. 25, Nr. 2, Seiten 112-114, XP002081342 ISSN 0041-624X in der Anmeldung erwähnt

## Beschreibung

Die Erfindung bezieht sich auf einen Prüfkopf für die Ultraschallprüfung nach dem Oberbegriff des Patentanspruchs 1.

Ein derartiger Prüfkopf ist aus DE 34 41 563 A1 vorbekannt.

Für die Untersuchung dünner Schichten wie auch für die Ultraschallprüfung auf sehr kleine Fehler hin werden hochfrequente Prüfköpfe benötigt. Wird nämlich der zu untersuchende Fehler oder wird die zu untersuchende Schichtdicke klein im Vergleich zur Wellenlänge der verwendeten Ultraschallsignale, stellt die Inhomogenität kein Hindernis mehr für das Ultraschallsignal dar. Die Erfindung bezieht sich auf Prüfköpfe mit ausreichend hoher Frequenz für den Nachweis dünner Schichten sowie kleiner Fehler. Die Prüfköpfe haben typischerweise eine Frequenz größer 20 MHz, die Frequenz liegt allgemein im Bereich zwischen 10 und 100 MHz, sie kann auch 150 MHz und höher betragen.

Aus dem Artikel von J. Büchler, M. Platte und H. Schmidt "Electronic circuit for high frequency and broad-band ultrasonic pulse-echo Operation" in: Ultrasonics, 1987, Vol 25, March, S. 1112 bis 1114 ist ein Prüfkopf mit einem Senderempfängerschwinger aus einer dünnen PVDF-Folie (Polyvinylidenflurid) bekannt. Sie wird über eine Senderelektronik langsam auf eine Sendespannung aufgeladen und dann möglichst rasch entladen. Das Entladen erfolgt durch Kurzschließen des Schwingers mittels eines geeigneten Schalters, der in dem Artikel als Transistorschalter ausgeführt ist. Es werden Entladezeiten von 10 ns für einen Spannungssprung von 150 V angegeben, die Kapazität des als Folie ausgeführten Schwingers beträgt 300 pF. Es wird ein im wesentlichen unipolarer, sehr kurzzeitiger Ultraschallimpuls erreicht, dessen Breite etwa 50 ns beträgt.

Nachteilig bei dem Prüfkopf nach dem genannt Artikel ist, dass nach Aussenden eines Ultraschallimpulses ausreichend lange gewartet werden muss, bis er empfangsbereit ist. Für praktische Prüfungsaufgaben sind die einzuhalten den Totzeiten nicht immer akzeptabel. Zwar kann man grundsätzlich, wie aus der Ultraschalltechnik bekannt ist, mit einem ausreichend langen Vorlaufkörper arbeiten und so die Nachteile der einzuhaltenden Totzeiten vermeiden, bei hochfrequenten Impulsen der hier in Rede stehenden Art ist dies aber mit dem Nachteil einer erheblichen Schallschwächung im Vorlaufkörper behaftet. Diesen Nachteil möchte man vermeiden.

Die nach dem Impuls-Echo-Verfahren arbeitenden Ultraschallprüfvorrichtungen haben üblicherweise einen Prüfkopf mit einem Senderempfängerschwinger, wie er aus dem oben genannten Artikel beispielhaft bekannt ist. Grundsätzlich gibt es aber auch Prüfköpfe mit getrennten Schwingern, also einem Senderschwinger und einem Empfängerschwinger, Hierzu wird nur beispielhaft verwiesen auf das DE-Buch J. Krautkrämer und W. Krautkrämer "Werkstoffprüfung mit Ultraschall" in Springer Verlag, 6. Aufl. Bei den vorbekannten Zweischwinger Prüfköpfen sind die Schwinger in Schallausbreitungsrichtung nebeneinander angeordnet. Dadurch ist der Weg des Ultraschalls zwischen Senderschwinger und Empfängerschwinger V-förmig. Bei der Prüfung von Schichten ist dies jedoch nachteilig, man möchte rechtwinklig zu den Begrenzungsflächen der Schichten messen.

Hier setzt nun die Erfindung ein. Sie hat es sich zur Aufgabe gemacht, einen Prüfkopf anzugeben, der insbesondere im Hochfrequenzbereich einsetzbar ist, bei dem die Beeinflussung der Empfängerelektronik durch den Sendeimpuls weitgehend ausgeschlossen ist und bei dem die Totzeit verringert ist.

Diese Aufgabe wird ausgehend von dem Prüfkopf der eingangs genannten Art gelöst durch den Prüfkopf mit den Merkmalen des Anspruchs 1.

Bei diesem Prüfkopf sind - wie an sich bekannt - separate Schwinger für das Aussenden und für das Empfangen des Ultraschallimpulses vorgesehen und unmittelbar hintereinander angeordnet. Der erfindungsgemäße Prüfkopf verhält sich im wesentlichen wie ein Einschwingerprüfkopf, weil die beiden hintereinander angeordneten Schwinger aus demselben Material gefertigt sind und jeweils aus Kunststofffolie hergestellt sind.

Wenn man einen Senderschwinger und einen Empfängerschwinger in Schallausbreitungsrichtung hintereinander anordnet, treten üblicherweise Reflektionen zwischen den beiden Schwingerkörpern auf. Diese lassen sich vermeiden, wenn beide Schwinger flächig miteinander verbunden, insbesondere aufeinander geklebt sind. Es wird vorzugsweise darauf geachtet, dass der Zwischenraum zwischen beiden Schwingern möglichst gering ist. Durch Verwendung zweier Schwinger aus dem gleichen Material treten keine Reflektionen an den Grenzflächen auf.

Die Erfindung schlägt also eine räumliche Ausbildung der beiden Schwinger vor, die möglichst ähnlich ist der Ausbildung eines Einschwingerprüfkopfes. Die beiden Schwinger sind jedoch galvanisch voneinander getrennt, wodurch die Beeinflussung der Empfängerelektronik durch den Sendeimpuls weitgehend ausgeschlossen ist. Die Totzeit ist dadurch weitestgehend unterdrückt und praktisch nicht mehr von Bedeutung. Insoweit kann bereits kurz nach Aussenden eines Ultraschallimpulses auf Empfang gegangen werden, demgemäß muss auch nur eine geringe Vorlaufstrecke benutzt werden. Auf eine Vorlaufstrecke möchte man nicht immer gänzlich verzichten, weil durch die Vorlaufstrecke auch die Schwinger geschützt werden.

In einer besonders bevorzugten Ausbildung ist die Dicke der Klebschicht zwischen Senderschwinger und Empfängerschwinger möglichst gering. Sie sollte so gering sein, dass Reflektionen praktisch nicht auftreten. Vorzugsweise wird ein Material für die Klebschicht verwendet, das möglichst ähnliche Schalleigenschaften hat wie das Material der Schwinger.

Als besonders bevorzugt hat es sich herausgestellt, Senderschwinger und Empfängerschwinger im Wesentlichen baugleich auszuführen. Insbesondere sollten die Schallfelder dieser beiden Schwinger möglichst gleich sein. Auf diese Weise wird eine weitestgehende Annäherung an einen Einschwingerprüfkopf erzielt.

Als bevorzugt hat es sich herausgestellt, den Senderschwinger an seiner vom Empfängerschwinger abgewandten Fläche mit einem Dämpfungskörper zu verbinden. Derartige Dämpfungskörper sind ansich bekannt, es ist aber im Sinne der Erfindung günstig, den Senderschwinger mit dem Dämpfungskörper zu verbinden. Auf diese Weise werden möglichst kurzzeitige Impulse erzielt.

Im gleichen Sinne hat es sich als günstig erwiesen, den Vorlaufkörper mit dem Empfängerschwinger zu verbinden. Der Empfängerschwinger wird bei dieser Anordnung zwar unmittelbar vom akustischen Sendeimpuls durchstrahlt und gibt dementsprechend ein elektrisches Signal an seinen Elektroden ab, dieser Vorgang ist aber äußerst kurzzeitig und hat für die Messung praktisch keine Auswirkung.

Als besonders bevorzugt hat es sich herausgestellt, die unmittelbar benachbarten Elektroden der beiden Schwinger auf das gleiche Potential zu legen, insbesondere auf Massepotential. Auf diese Weise sind keine Probleme einer galvanischen Trennung zwischen den beiden benachbarten Elektroden gegeben.

Vorteilhaft ist es weiterhin, die Senderelektronik und die Empfängerelektronik so nahe wie möglich an den jeweiligen Schwingern anzuordnen, insbesondere sie im selben Gehäuse unterzubringen. Dadurch wird der Einfluß von parasitären Kapazitäten und Induktivitäten weitgehend ausgeschlossen.

In einer besonders bevorzugten Ausführungsform schließt die Senderelektronik niederohmig ab, während der Eingang der Empfängerelektronik hochohmig ausgeführt ist. Der niederohmige Senderausgang ermöglicht die erwünschten, möglichst kurzzeitigen Spannungsabfälle. Durch den hochohmigen Sendereingang wird die Empfängerfolie möglichst wenig belastet.

Weitere Vorteile und Merkmale der Erfindung ergeben sich aus den übrigen Ansprüchen sowie der nun folgenden Beschreibung von zwei nicht einschränkend zu verstehenden Ausführungsbeispielen der Erfindung, die unter Bezugnahme auf die Zeichnung im folgenden näher erläutert werden. In dieser Zeichnung zeigen:
- FIG. 1:: eine Seitenansicht in Explosionsdarstellung eines Prüfkopfes,
- FIG. 2:: eine Seitenansicht eines Prüfkopfes in geänderter Ausführung,
- FIG. 3:: ein elektronisches Schaltbild der Empfängerelektronik und
- FIG. 4:: ein elektronisches Schaltbild der Senderelektronik.

In einem hier nur angedeuteten Prüfkopfgehäuse 20 sind in Ausbreitungsrichtung 22 (Pfeile) des Ultraschalls gesehen hintereinander angeordnet ein Dämpfungskörper 24, ein Senderschwinger 26 mit einer oberen Elektrode 28 und einer unteren Elektrode 30, ein Empfängerschwinger 32 mit einer oberen Elektrode 34 und einer unteren Elektrode 36 sowie ein Vorlaufkörper 38. Alle diese Teile sind rund bzw. zylindrisch, sie sind zu einer Achse 40 gleichachsig angeordnet.

Der Dämpfungskörper 24 ist aus einem Material gefertigt, das möglichst den gleichen Wellenwiderstand wie die beiden baugleichen Schwinger 26, 32 hat. Er ist konkret aus Giessharz ausgeführt und unmittelbar auf den Senderschwinger 26, also dessen obere Elektrode 28, aufgegossen. Er ist Axialrichtung etwa 10 mm lang.

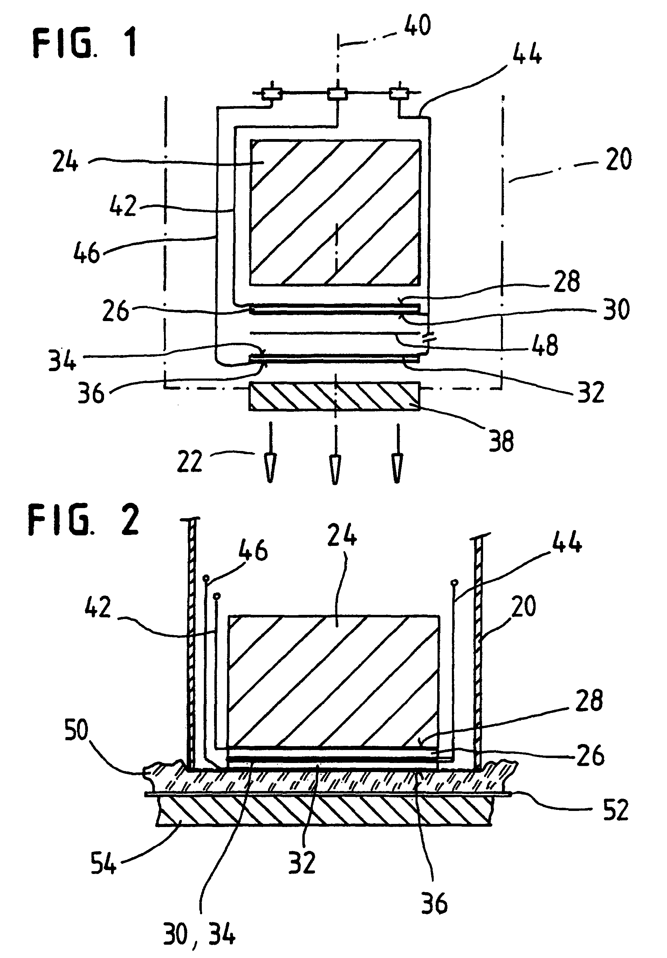

Als Senderschwinger 26 und Empfängerschwinger 32 werden baugleiche Schwinger verwendet. Ausgehend von einer fertigen PVDF-Folie, wie sie handelsüblich bezogen werden kann, werden die Elektroden 28 und 30 bzw. 34 und 36 durch Aufdampfen aufgetragen und die Elektroden anschließend kontaktiert. Die entsprechenden Verbindungsleitungen 42, 44, 46 sind in Figur 1 dargestellt. Oberhalb des Dämpfungskörpers 24 sind drei Lötstützpunkte angebracht. Zu ihnen sind die Verbindungsleitungen 42 bis 46 geführt.

Die beiden Schwinger 26, 32 sind durch eine Klebschicht 48 miteinander verbunden. Diese befindet sich zwischen der unteren Elektrode 30 des Senderschwingers 26 und der oberen Elektrode 34 des Empfängerschwingers 32. Sie ist so dünn wie möglich ausgeführt. Sie kann aus einem leitenden Material bestehen. Ihre Dicke ist so gewählt, dass sie wesentlich kleiner ist als die Wellenlänge, für die die beiden Schwinger 26, 32 ausgelegt sind.

An der Vorderseite sitzt zum Schutz der empfindlichen Folien ein Vorlaufkörper 38 aus Polystyrol. Polystyrol weist bis zu hohen Frequenzen, beispielsweise 100 MHz, die geringsten Verluste von den untersuchten Materialien auf. Es besitzt eine gute Impedanzanpassung an PVDF. Möglich ist auch ein Vorlaufkörper aus Acrylglas, er hat etwas höhere Verluste.

Die Anordnung der beiden Folien von Senderschwinger 26 und Empfängerschwinger 32 ist so gewählt, dass ein Maximum von Empfindlichkeit erreicht wird. Durch Verwenden der hinteren Folie als Senderschwinger 26 wird eine bessere Bedämpfung dieser Folie möglich. So können ungewollte Reflektionen an der Rückseite minimiert werden. Die Verbindung der einzelnen Materialien muß sehr sorgfältig erfolgen, insbesondere müssen Luftblasen vermieden werden. Im Frequenzbereich machen sich selbst dünnere Verbindungsschichten, wie beispielsweise Klebschichten, bemerkbar.

Figur 2 zeigt eine andere Ausbildung des eigentlichen Prüfkopfes. In diesem Fall sind die Schwinger 26, 32 nicht aus vorgefertigten Folien erstellt, sondern durch Aufdampfen des Materials PVDF gefertigt. Dieses Aufdampfen erfolgt entweder auf eine sehr dünne Masseelektrode 30, 34, die für beide Schwinger 26, 32 gemeinsam vorgesehen ist. Verwendet wird eine hauchdünne Goldfolie oder eine Folie aus entsprechendem Material. Sie wird an ihren beiden Flächen in gleicher Weise mit PVDF bedampft. Anschließend werden die obere Elektrode 28 bzw. die untere Elektrode 36 aufgebracht. Auf die obere Elektrode 28 wird wiederum der Dämpfungskörper 24 aufgegossen. Ein Vorlaufkörper 38 aus festem Material ist diesmal nicht vorgesehen. Stattdessen wird eine Wasservorlaufstrecke 50 eingesetzt. Figur 2 zeigt eine dünne Schicht 52 wie sie mit dem Prüfkopf überprüft werden soll, sie befindet sich auf einem Träger 54.

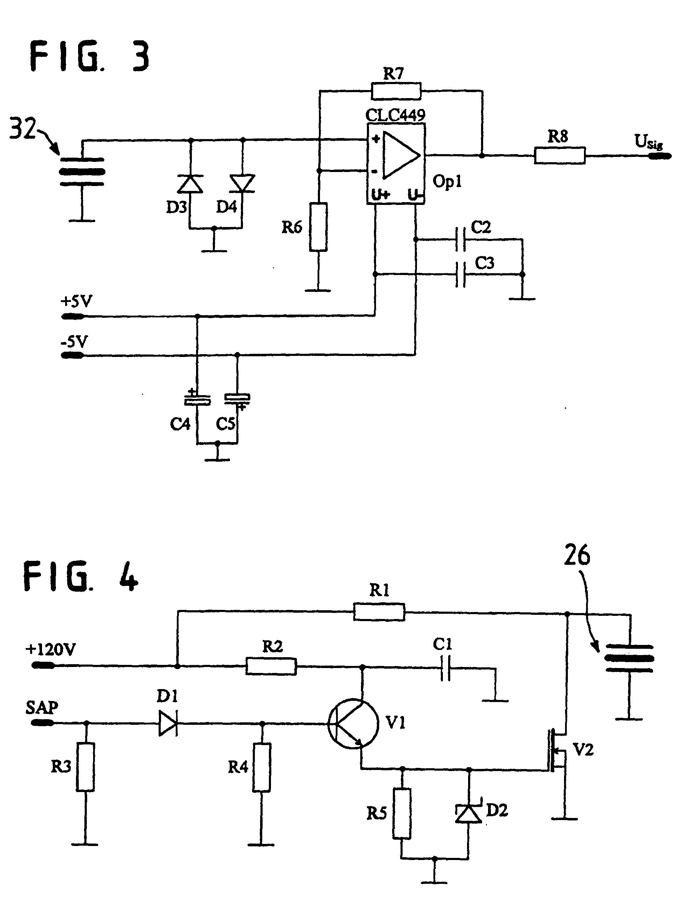

Mittels der Senderelektronik (Figur 3) wird der Senderschwinger 26 langsam aufgeladen und mit einem Sendeauslöseimpuls (SAP) schlagartig entladen. Über den Widerstand R1 kann mit Kenntnis der Kapazität C der Folie die Ladezeitkonstante eingestellt werden. Durch eine langsame Aufladung wird verhindert, dass während des Aufladens ein akustisches Signal abgestrahlt wird.

Die Entladung des Senderschwingers 26 geschieht über den Transistor V2. Für diesen Transistor wird ein VMOS-Transistor eingesetzt. Die Ansteuerung dieses Transistors erfolgt unter Ausnutzung des Avalanche-Effektes im Transistor V1. Die Senderelektronik befindet sich innerhalb des Prüfkopfgehäuses 20.

Die Empfängerelektronik gemäß Figur 4 ist ebenfalls im Prüfkopf integriert. Es wird auf möglichst kurze Zuleitungen geachtet, diese sollten kleiner als 2 cm lang sein, vorzugsweise kürzer. Die Empfängerelektronik benutzt einen Operationsverstärker Op1 vom Typ CLC 449 der Firma Comlinear, er ist auf vierfache Verstärkung eingestellt. Er bildet einen hochohmigen Abschluß des Empfängers, um die Empfangsfolie nicht zu belasten. Auf diese Weise wird eine Signalverfälschuug vermieden. Die Verstärkung ist dabei durch die Widerstände R6 und R7 festgelegt. Schließlich ist der Operationsverstärker ein Kabeltreiber für das anschließende 50 Ohm Koaxialkabel zur Signalübertragung des Ausgangssignals Usig.

Aufgrund nicht idealer Masseverhältnisse an der gemeinsamen Massefläche der beiden Schwinger 26, 32 kommt es bei dem Empfängerschwinger 32 zu einem elektrischen Übersprechen des Sendesignals. Die antiparallel geschalteten Dioden D3 und D4 haben die Aufgabe, dieses Übersprechen zu begrenzen. Sie schützen gleichzeitig den Operationsverstärker davor, in den Sättigungsbereich zu gelangen.

Senderelektronik und Empfängerelektronik sind in SMD-Technik realisiert worden, um die Baugröße zu minimieren. Die gesamte Elektronik findet damit auf einer Leiterplatte Platz, die eine Größe von 15 mm x 32 mm hat.

## Patentansprüche

1. Prüfkopf für die Ultraschallprüfung nach dem Impuls-Echo-Verfahren, insbesondere zur Erzeugung eines kurzzeitigen, möglichst unipolaren Ultraschallimpulses, mit einem Senderschwinger (26) und einem Empfängerschwinger (32), die jeweils mit Elektroden (28, 30, 34, 36) versehen sind, wobei der Senderschwinger (26) und der Empfängerschwinger (32) in Schallausbreitungsrichtung unmittelbar hintereinander angeordnet sind, **dadurch gekennzeichnet, dass** Senderschwinger (26) und Empfängerschwinger (32) aus dem gleichen Material gefertigt sind und jeweils aus Kunststofffolie hergestellt sind.

2. Prüfkopf nach Anspruch 1, **dadurch gekennzeichnet, dass** Senderschwinger (26) und Empfängerschwinger (32) durch eine Klebschicht (48) miteinander verbunden sind, und dass die Dicke der Klebschicht (48) zwischen Senderschwinger (26) und Empfängerschwinger (32) möglichst gering ist, insbesondere wesentlich kleiner ist als die Wellenlänge, für die die Schwinger (26, 32) ausgelegt sind.

3. Prüfkopf nach Anspruch 1, **dadurch gekennzeichnet, dass** der Senderschwinger (26) und der Empfängerschwinger (32) im Wesentlichen baugleich sind.

4. Prüfkopf nach Anspruch 1, **dadurch gekennzeichnet, dass** der Senderschwinger (26) an seiner vom Empfängerschwinger (32) abgewandten Fläche mit einem Dämpfungskörper (24) verbunden ist.

5. Prüfkopf nach Anspruch 1, **dadurch gekennzeichnet, dass** der Empfängerschwinger (32) an seiner vom Senderschwinger (26) abgewandten Fläche mit einem Vorlaufkörper (38) verbunden ist, insbesondere, dass ein Vorlaufkörper (38) verwendet wird, der nur wenige Millimeter dick ist, typischerweise zwischen 1 bis 4 mm dick, vorzugsweise 2 mm dick ist.

6. Prüfkopf nach Anspruch 1, bei dem der Senderschwinger (26) mit einer Senderelektronik und der Empfängerschwinger (32) mit einer Empfängerelektronik verbunden ist, **dadurch gekennzeichnet, dass** die unmittelbar benachbarten, durch die Klebschicht (48) verbundenen Elektroden (28, 30, 34, 36) auf gleichem Potential liegen, insbesondere auf Massepotential liegen.

7. Prüfkopf nach Anspruch 6 mit einem Prüfkopfgehäuse, **dadurch gekennzeichnet, dass** Senderelektronik und Empfängerelektronik so nah wie möglich an den Schwingern (26, 32) angeordnet sind, insbesondere sich in dem Gehäuse des Prüfkopfs befinden.

8. Prüfkopf nach Anspruch 6, **dadurch gekennzeichnet, dass** der Senderschwinger (26) mit einem niederohmig ausgeführten Ausgang der Senderelektronik verbunden ist und dass der Empfängerschwinger (32) mit einem hochohmig ausgebildeten Empfängereingang verbunden ist.

9. Prüfkopf nach Anspruch 1, **dadurch gekennzeichnet, dass** die Schwinger aus PVDF-Folien hergestellt sind.

10. Verfahren zum Betreiben eines Prüfkopfes nach einem der vorangegangenen Patentansprüche, **dadurch gekennzeichnet, dass** zur Erzeugung der Anregungsspannung des Senderschwingers (26) an diesen eine zeitlich langsam ansteigende Spannung angelegt wird und nach Erreichen einer ausreichenden Spannung der Senderschwinger (26) anschließend möglichst in sehr kurzer Zeit kurzgeschlossen wird.

## Claims

1. Probe for ultrasonic testing according to the pulse-echo method, in particular for generating a short, possibly unipolar ultrasound pulse, provided with a transmitter transducer (26) and with a receiver transducer (32), each of them being provided with electrodes (28, 30, 34, 36), whereby the transmitter transducer (26) and the receiver transducer (32) are arranged directly one behind the other in the direction of sound propagation, **characterized in that** the transmitter transducer (26) and the receiver transducer (32) are made of the same material and are made of plastic foils in each case.

2. Probe according to claim 1, **characterized in that** the transmitter transducer (26) and the receiver transducer (32) are glued together by a layer of glue (48), and **in that** the thickness of this layer of glue (48) between the transmitter transducer (26) and the receiver transducer (32) is possibly small, in particular that it is considerably smaller than the wave length for which the two transducers (26, 32) are designed.

3. Probe according to claim 1, **characterized in that** the transmitter transducer (26) and the receiver transducer (32) are essentially built according to the same design principle.

4. Probe according to claim 1, **characterized in that** the transmitter transducer (26) is connected with an attenuator (24) by its surface opposite the receiver transducer (32).

5. Probe according to claim 1, **characterized in that** the receiver transducer (32) is connected with a precursor body (38) by its surface opposite the transmitter transducer (26), in particular that the precursor body (38) used has a thickness of only a few millimeters, typically of between 1 to 4 mm, preferably a thickness of 2 mm.

6. Probe according to claim 1, having the transmitter transducer (26) connected with a transmitter electronics and the receiver transducer (32) connected with a receiver electronics, **characterized in that** the two directly adjacent electrodes (28, 30, 34, 36) joined by the layer of glue (48) are equipotential, in particular that they are lying on mass potential.

7. Probe according to claim 6 with a probe housing, **characterized in that** the transmitter electronics and the receiver electronics are arranged the nearest possible to the transducers, in particular that they are located in the housing of the probe.

8. Probe according to claim 6, **characterized in that** the transmitter transducer (26) is connected to a low impedance output of the transmitter electronics and that the receiver transducer (32) is connected to a highly resistive receiver input.

9. Probe according to claim 1, **characterized in that** the transducers are made of PVDF-foils.

10. Method for operating a probe according to one of the afore-mentioned claims, **characterized in that**, in order to produce the exciting potential of the transmitter transducer (26), a slowly increasing potential is fed to said transmitter transducer and that, once a sufficient potential has been reached, the transmitter transducer (26) is short-circuited in the shortest period of time possible.

## Revendications

1. Palpeur pour le contrôle par ultrasons selon le procédé d'échos impulsionnels, notamment pour produire une impulsion ultrasonore de courte durée, si possible unipolaire, avec un oscillateur à cristal de quartz émetteur (26) et un oscillateur à cristal de quartz récepteur (32) chacun muni d'électrodes (28, 30, 34, 36), l'oscillateur à cristal de quartz émetteur (26) et l'oscillateur à cristal de quartz récepteur (32) étant disposés l'un derrière l'autre suivant la direction de propagation du son, **caractérisé en ce que** l'oscillateur à cristal de quartz émetteur (26) et l'oscillateur à cristal de quartz récepteur (32) sont fabriqués dans le même matériau et sont réalisés chacun en feuille de matière plastique.

2. Palpeur selon la revendication 1, **caractérisé en ce que** l'oscillateur à cristal de quartz émetteur (26) et l'oscillateur à cristal de quartz récepteur (32) sont reliés entre eux par une couche adhésive (48) et que l'épaisseur de la couche adhésive (48) entre l'oscillateur à cristal de quartz émetteur (26) et l'oscillateur à cristal de quartz récepteur (32) est aussi faible que possible et notamment sensiblement inférieure à la longueur d'ondes pour laquelle les oscillateurs (26, 32) ont été conçus.

3. Palpeur selon la revendication 1, **caractérisé en ce que** l'oscillateur à cristal de quartz émetteur (26) et l'oscillateur à cristal de quartz récepteur (32) sont d'une exécution sensiblement identique.

4. Palpeur selon la revendication 1, **caractérisé en ce que** l'oscillateur à cristal de quartz émetteur (26) est relié par sa face détournée de l'oscillateur à cristal de quartz récepteur (32) à un corps amortisseur (24).

5. Palpeur selon la revendication 1, **caractérisé en ce que** l'oscillateur à cristal de quartz récepteur (32) est relié par sa face détournée de l'oscillateur à cristal de quartz émetteur (26) à un corps de tête (38), notamment que l'on utilise un corps de tête (38) d'une épaisseur de quelques millimètres seulement, typiquement comprise entre 1 et 4 mm, de préférence d'une épaisseur de 2 mm.

6. Palpeur selon la revendication 1, **caractérisé en ce que** l'oscillateur à cristal de quartz émetteur (26) est relié à un émetteur électronique et l'oscillateur à cristal de quartz récepteur (32) à un récepteur électronique, **caractérisé en ce que** les électrodes (28, 30, 34, 36) immédiatement voisines reliées par la couché adhésive (48) sont au même potentiel, notamment au potentiel de masse.

7. Palpeur selon la revendication 6 avec un boîtier de palpeur, **caractérisé en ce que** l'émetteur électronique et le récepteur électronique sont disposés aussi près que possible des oscillateurs (26, 32), notamment qu'ils se trouvent dans le boîtier du palpeur.

8. Palpeur selon la revendication 6, **caractérisé en ce que** l'oscillateur à cristal de quartz émetteur (26) est relié à une sortie basse impédance de l'émetteur électronique et que l'oscillateur à cristal de quartz récepteur (32) est relié à une entrée haute impédance du récepteur.

9. Palpeur selon la revendication 1, **caractérisé en ce que** l'oscillateur est réalisé en feuilles de PVDF.

10. Procédé de mise en fonctionnement d'un palpeur selon l'une quelconque des revendications précédentes, **caractérisé en ce que**, pour produire la tension d'excitation de l'oscillateur émetteur (26), on applique à celui-ci une tension augmentant lentement dans le temps et que l'on court-circuite l'oscillateur à cristal de quartz émetteur (26) en très peu de temps dès qu'une tension suffisante est atteinte.
